## Europäisches Patentamt

## European Patent Office

## Office européen des brevets

(19)

(11) Veröffentlichungsnummer: **0 096 300**
**B1**

(12) EUROPÄISCHE PATENTSCHRIFT

(45) Veröffentlichungstag der Patentschrift:
04.09.85

(51) Int. Cl.⁴: **H 02 M 3/335**

(21) Anmeldenummer: 83105205.5

(22) Anmeldetag: 26.05.83

(54) Schaltnetzteil, inbesondere für einen Fernsehempfänger.

(30) Priorität: 28.05.82 DE 3220188

(43) Veröffentlichungstag der Anmeldung:
21.12.83 Patentblatt 83/51

(45) Bekanntmachung des Hinweises auf die Patenterteilung:
04.09.85 Patentblatt 85/36

(84) Benannte Vertragsstaaten:
AT DE FR GB IT

(56) Entgegenhaltungen:
DE - A - 1 613 818
DE - A - 2 122 609
DE - A - 3 017 606
FR - A - 2 502 418

IBM TECHNICAL DISCLOSURE BULLETIN, Band 21, Nr. 12, Mai 1979, Seiten 4909-4910, New York, USA, H.S. HOFFMANN JR.: "Multiple regulator controls using diversion switches"
IBM TECHNICAL DISCLOSURE BULLETIN, Band 15, Nr. 10, März 1973, Seiten 3175-3176, New York, USA, G.L. MATTSON et al.: "High-frequency power supply"

(73) Patentinhaber: **Licentia Patent-Verwaltungs-GmbH, Theodor-Stern-Kai 1, D-6000 Frankfurt/Main 70 (DE)**

(72) Erfinder: **Von der Ohe, Wilfried, Holtenser Weg 35, D-3257 Springe 5 (DE)**

(74) Vertreter: **Einsel, Robert, Dipl.-Ing., Theodor-Stern-Kai 1, D-6000 Frankfurt/Main 70 (DE)**

ACTORUM AG

## Beschreibung

Bei Geräten der Nachrichtentechnik wie z.B. einem Fernsehempfänger ist es bekannt, die für die einzelnen Stufen notwendigen Betriebsspannungen mit einem Schaltnetzteil aus der Netzspannung zu erzeugen (Funkschau 1975, Heft 5, Seiten 40-43). Ein Schaltnetzteil ermöglicht die für den Anschluss äusserer Geräte und für die Massnahmen zur Schutzisolierung vorteilhafte galvanische Trennung der Empfängerschaltung vom Netz. Da ein Schaltnetzteil mit einer gegenüber der Netzfrequenz hohen Frequenz von ca. 30 kHz arbeitet, kann der zur galvanischen Trennung dienende Trenntransformator gegenüber einem Netztrafo für 50 Hz wesentlich kleiner und leichter ausgebildet sein. Durch mehrere Wicklungen oder Wicklungsabgriffe und angeschlossene Gleichrichter können auf der Sekundärseite des Trenntransformators Betriebsspannungen unterschiedlicher Grösse und Polarität erzeugt werden.

Ein solches Schaltnetzteil enthält eine Regelschaltung zur Stabilisierung der Amplitude der auf der Sekundärseite erzeugten Betriebsspannungen. In dieser Regelschaltung wird eine durch Gleichrichtung der Impulsspannung am Trafo gewonnene Stellgrösse erzeugt und mit einer Bezugsspannung verglichen. In Abhängigkeit von der Abweichung wird der Schaltzeitpunkt des auf der Primärseite vorgesehenen elektronischen Schalters so gesteuert, dass die Amplitude der erzeugten Betriebsspannungen konstant bleibt.

Bei einem solchen Schaltnetzteil kann die genannte Regelschaltung z.B. durch ein fehlerhaftes Bauteil ausfallen. Die Regelung der Amplitude der erzeugten Betriebsspannungen ist dann unkontrolliert. Die Betriebsspannungen können dann auf den doppelten oder dreifachen Wert ansteigen. Dadurch besteht die Gefahr, dass das Schaltnetzteil oder die an die Betriebsspannungen angeschlossenen Verbraucher wie z.B. der Heizfaden der Bildröhre oder der Zeilenendstufentransistor zerstört werden. Der Anstieg der Betriebsspannungen kann darüber hinaus einen Anstieg der im Fernsehempfänger erzeugten Hochspannung und dadurch eine Röntgenstrahlung auslösen.

Es ist auch ein Schaltnetzteil bekannt (DE-OS Nr. 2727332), bei dem zum Schutz gegen einen zu starken Anstieg der erzeugten Betriebsspannungen aus der Impulsspannung an der Primärseite des Trafos eine Stellgrösse gewonnen wird, die beim Überschreiten eines Schwellwertes den Rückkopplungsweg unwirksam steuert. Durch die Unterbrechung des Rückkopplungsweges kann das Schaltnetzteil nicht mehr schwingen, so dass in erwünschter Weise auch keine Betriebsspannungen mehr erzeugt werden. Diese Schaltung erfordert jedoch eine Vielzahl von Bauteilen und ist daher relativ teuer.

Der Erfindung liegt die Aufgabe zugrunde, eine sicher wirkende Schutzschaltung mit verringertem Schaltungsaufwand gegen die oben beschriebenen Gefahren zu schaffen.

Diese Aufabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung: Der Schalttransistor auf der Primärseite wird von der primärseitigen Rückkopplungswicklung während seiner stromleitenden Phase mit einem Basisstrom angesteuert. Wenn jetzt eine Sekundärwicklung während dieser stromleitenden Phase stark belastet, z.B. über den Thyristor kurzgeschlossen wird, bricht auch die Spannung an der primärseitigen Rückkopplungswicklung zusammen. Diese Wicklung kann dann für den Schalttransistor nicht mehr einen für den leitenden Betrieb ausreichenden Basisstrom liefern. Das Schaltnetzteil schwingt dann nicht mehr, so dass die sekundärseitigen Betriebsspannungen in erwünschter Weise zusammenbrechen. Der schaltungstechnische Aufwand ist gering. Er besteht vorzugsweise aus einem Thyristor und zwei Widerständen.

Ein Ausführungsbeispiel der Erfindung wird anhand der Zeichnung erläutert. Darin zeigen

Fig. 1 ein erfindungsgemäss ausgebildetes Schaltnetzteil und

Fig. 2 Kurven zur Erläuterung der Wirkungsweise. Dabei zeigen die kleinen Buchstaben, an welchen Punkten in Fig. 1 die Spannungen gemäss Fig. 2 stehen.

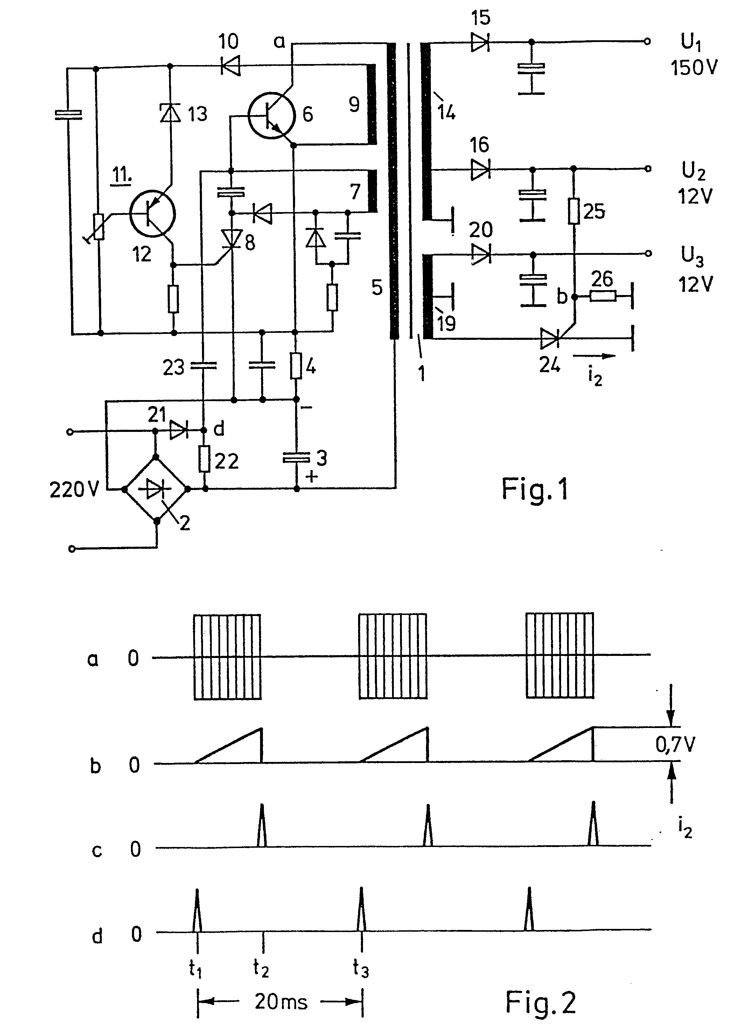

Das Schaltnetzteil gemäss Fig. 1 enthält auf der Primärseite des Trenntransformators 1 den Netzgleichrichter 2, den Ladekondensator 3, den Strom-Messwiderstand 4, die Primärwicklung 5, den Schalttransistor 6, die zur Schwingungserzeugung dienende Rückkopplungswicklung 7, den zur Steuerung des Schalttransistors 6 dienenden Thyristor 8, die Regelwicklung 9, den zur Erzeugung der Regelspannung dienenden Gleichrichter 10 sowie die zur Stabilisierung der Betriebsspannungen dienende Regelschaltung 11 mit dem Transistor 12 und der eine Referenzspannung liefernden Zenerdiode 13. Die Sekundärwicklung 14 liefert über den Gleichrichter 15 eine erste Betriebsspannung U1 von 150 V. Ein Abgriff der Wicklung 14 liefert über den Gleichrichter 16 eine zweite Betriebsspannung U2 von 12 V für einen Fernbedienungsempfänger. Eine weitere Sekundärwicklung 19 liefert über den Gleichrichter 20 eine dritte Betriebsspannung U3 von 12 V. Die Polung der Wicklungen 14, 19 und der Gleichrichter 15, 16, 20 ist derart, dass die Gleichrichter 15, 16, 20 während der Sperrphase des Schalttransistors 6 durch die sekundärseitig auftretenden Impulsspannungen leitend gesteuert sind und die angeschlossenen Ladekondensatoren aufladen.

An das untere Ende der Wicklung 19 ist zusätzlich der Thyristor 24 angeschlossen. An die Steuerelektrode b des Thyristors 24 ist die Betriebsspannung U2 über den Spannungsteiler 25, 26 angelegt.

Die Wirkungsweise der Schaltung wird anhand der Fig. 2 erläutert. Es sei angenommen, dass das Schaltnetzteil im Zeitpunkt t1 in Betrieb genommen wird. Mit der Diode 21 wird aus der Netzspannung am Punkt d ein positiver Impuls erzeugt. Dieser gelangt über den Kondensator 23 auf die Basis des Schalttransistors 6 und steuert diesen leitend. Dadurch beginnt das Schaltnetzteil zu schwingen, wobei die Schwingung durch die Rückkopplungswicklung 7 aufrechterhalten wird. Am Punkt a entsteht dann eine mäanderförmige Wechselspannung mit einer Frequenz von etwa 25-30 kHz. Die daraufhin in den Sekundärwicklungen 14, 19 erzeugten Impulse erzeugen in der beschriebenen Weise die Betriebsspannungen U1, U2, U3. Der Spannungsteiler 25, 26 ist so bemessen, dass der Thyristor 24 gesperrt bleibt, d.h. die Spannung am Punkt b ist kleiner als 0,7 V. Der Thyristor 24 hat dann keine Wirkung. Die Amplitude der Spannungen U1, U2, U3 wird über die Regelschaltung 11 stabilisiert.

Es sei jetzt angenommen, dass durch einen Fehler in der Regelschaltung 11, z.B. durch Ausfall eines Bauteiles, die Regelung zur Stabilisierung der Betriebsspannungen U1, U2, U3 nicht mehr wirkt und diese Betriebsspannungen stark ansteigen. Dadurch steigt auch die Spannung am Punkt b an. Im Zeitpunkt t2 erreicht diese Spannung den Wert von 0,7 V, so dass der Thyristor 24 zündet. Der untere Teil der Wicklung 19 ist jetzt praktisch kurzgeschlossen. Das Netzteil ist dadurch sekundärseitig so stark belastet, dass die Rückkopplungswicklung 7 keinen ausreichenden Basisstrom zur Steuerung des Schalttransistors 6 in seine stromleitende Phase mehr liefert. Im Zeitpunkt t2 bricht die Schwingung des Schaltnetzteiles ab, so dass auch die Wechselspannung am Punkt a auf null abfällt. Den Ladekondensatoren der Gleichrichter 15, 16, 20 wird kein Strom mehr zugeführt, so dass die Betriebsspannungen U1, U2, U3 nicht weiter ansteigen können, sondern entsprechend den wirksamen Entladezeitkonstanten abfallen. Das Schaltnetzteil würde auf diese Weise an sich beliebig lange ausgeschaltet bleiben.

Im Zeitpunkt t3 erscheint am Punkt b der nächste aus der Netzspannung gewonnene Startimpuls, der den Schalttransistor 6 wieder leitend steuert, so dass die Wechselspannung am Punkt a wieder auftritt. Das Schaltnetzteil geht also in einen getakteten Betrieb über, bei dem die übertragene Leistung entsprechend dem Zeitverhältnis zwischen Einschaltphase und Ausschaltphase der Spannung am Punkt a beträchtlich verringert ist. Die Betriebsspannungen U1, U2, U3 können nicht mehr zuverlässig hohe Werte annehmen.

### Patentansprüche

1. Schaltnetzteil, insbesondere für einen Fernsehempfänger, mit einer Arbeitswicklung (5), einem Schalttransistor (6), einer Rückkopplungswicklung (7) und einer Regelschaltung (11) auf der Primärseite sowie mit Gleichrichtern (15, 16, 20) zur Erzeugung von Betriebsspannungen (U1, U2, U3) auf der Sekundärseite eines Trenntransformators (1) als Sperrwandler, gekennzeichnet durch folgende Merkmale:

a) An eine Wicklung (19) ist ein Thyristor (24) angeschlossen, der für die während der stromführenden Phase der Schalttransistoren (6) an der Wicklung (19) auftretende Spannung in Durchlassrichtung gepolt ist.

b) An die Steuerelektrode des Thyristors (24) ist eine der Betriebsspannungen (U2) in solcher Höhe angelegt, dass der Thyristor (24) im Normalbetrieb gesperrt bleibt und bei einem unzulässigen Anstieg der Betriebsspannung (U3) zündet.

2. Netzteil nach Anspruch 1, dadurch gekennzeichnet, dass die eine Betriebsspannuing (U2) über einen Spannungsteiler (25, 26) an die Steuerelektrode des Thyristors (24) angelegt ist.

3. Netzteil nach Anspruch 1, dadurch gekennzeichnet, dass die Wicklung (19) eine Sekundärwicklung des Trenntransformators (1) ist.

### Claims

1. Switch mode power supply means, especially for a television receiver, having a working winding (5), a switching transistor (6), a back-coupling winding (7) and a control switch (11) on the primary side of a divided transformer (1), and also having rectifiers (15, 16, 20) for the production of the drive voltages (U1, U2, U3) on the secondary side of the transformer (1), characterized by the following features:

(a) Connected to a winding (19) there is a thyristor (24) which is poled in the permitted direction for the voltage at the winding (19) arising during the current conducting phase of the switching transistor (6).

(b) One of the drive voltages (U2) is applied to the control electrode of the thyristor (24) with such magnitude that the thyristor (24) remains blocked in the normal working state and fires on the occurrence of an inadmissible rise of the drive voltage (U3).

2. Power supply means according to Claim 1, characterized in that the drive voltage (U3) is applied to the control electrode of the thyristor (24) via a voltage divider (25, 26).

3. Power supply means according to Claim 1, characterized in that the winding (19) is a secondary winding of the divided transformer (1).

### Revendications

1. Dispositif d'alimentation-secteur, notamment pour un récepteur de télévision, comportant un enroulement de travail (5), un transistor de commande (6), un enroulement de couplage de réaction (7) et un circuit de régulation (11) sur le côté primaire, ainsi que des redresseurs (15, 16, 20) pour produire des tensions de service (U1, U2, U3) sur le côté secondaire d'un transformateur de séparation (1), caractérisé par les particularités suivantes:

a) Un enroulement (19) est relié à un thyristor (24) qui est polarisé dans le sens de conduction pour la tension se produisant pendant la phase de fourniture de courant par les transistors de commande (6) à l'enroulement (19).

b) L'électrode de commande du thyristor (24) est soumise à une des tensions de service (U2) d'une grandeur telle que le thyristor (24) reste bloqué en service normal et soit amorcé lors d'une augmentation excessive de la tension de service (U3).

2. Dispositif d'alimentation-secteur selon la revendication 1, caractérisé en ce que la tension de service (U3) est appliquée à l'électrode de commande du thyristor (24) par l'intermédiaire d'un diviseur de tension (25, 26).

3. Dispositif d'alimentation-secteur selon la revendication 1, caractérisé en ce que l'enroulement (19) est un enroulement secondaire du transformateur de séparation (1).

0 096 300

Fig.1

Fig.2

5